# EUROPEAN PATENT APPLICATION

(11) **EP 1 257 088 A2**
(43) Date of publication of application: **13.11.2002**
(21) Application number: 02008356.4
(22) Date of filing: 12.04.2002
(51) Int. Cl.: H04L 12/24, H04L 12/18, H04L 29/06

(54) **Event publishing service system and method**

(30) Priority: 11.05.2001 US 853736
(71) Applicant: ALCATEL, 75008 Paris (FR)
(72) Inventor: Johnson, Paul A., Plano, TX 75075-7439 (US)
(74) Representative: Dreiss, Fuhlendorf, Steimle & Becker

(57) **Abstract**

An **Event Publishing Service (EPS)** system and method incorporating a software component that permits encapsulation of the details necessary in constructing any arbitrary **Event Transport Architecture (ETA)** is disclosed. By encapsulating the details of the ETA, the EPS removes the coupling between the ETA policy and any dependent components. This removes coupling problems between individual software components and enables a high degree of flexibility in the design and implementation for any distributed software that uses the ETA. By significantly reducing coupling, the EPS enables greater flexibility in the ETA with lower cost than other solutions. Although it is difficult to quantify, it is not unreasonable to expect that using the EPS will result in a reduction in life-cycle costs by a factor of two to ten over prior art solutions, depending upon the number of other components.

## Description

### FIELD OF THE INVENTION

The present invention is related in the general area of network and distributed **Element Management Systems (EMS)** and software techniques that may be used to minimize the maintenance overhead of EMS when responding to changes in network protocols and/or incorporation of new/modified network elements (NE).

### Overview (0100)

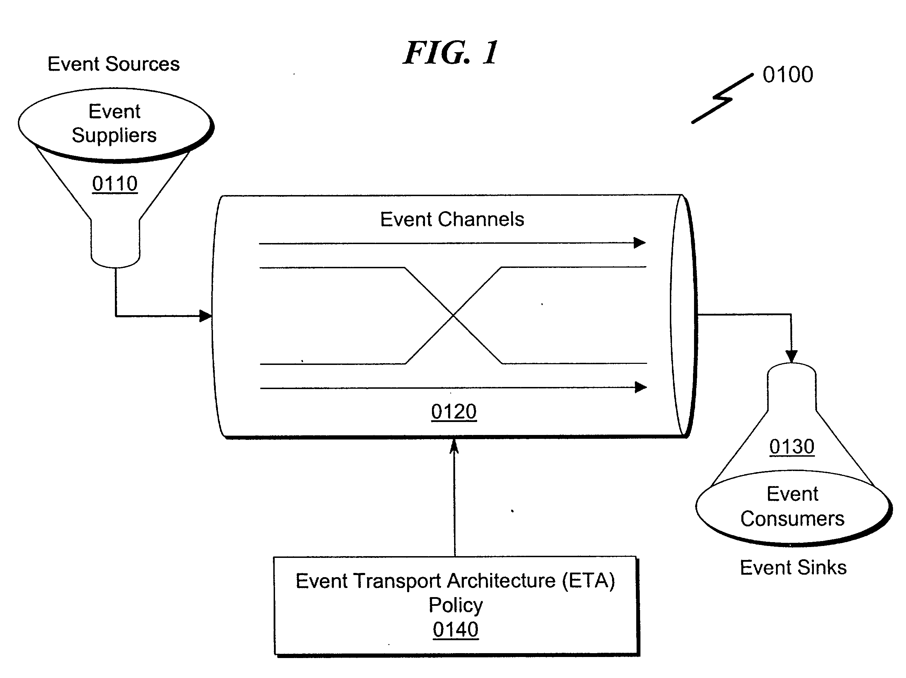

As illustrated in FIG. 1 (**0100**), the present invention may have application in situations where there are one or more event suppliers/sources (**0110**) that communicate via event channels (**0120**) to target event consumers/sinks (**0130**). Many distributed software solutions exchange large amounts of data by way of events. These events must be transported efficiently from initial event suppliers (**0110**) to final event consumers (**0130**). In complicated systems, the transport mechanisms are usually a set of event channels (**0120**). The number and event content of the channels depends upon the application. To complete the event transport architecture (ETA), the initial event suppliers (**0110**) and event consumers (**0130**) must be connected to the event channels (**0120**).

### Exemplary Application (0200)

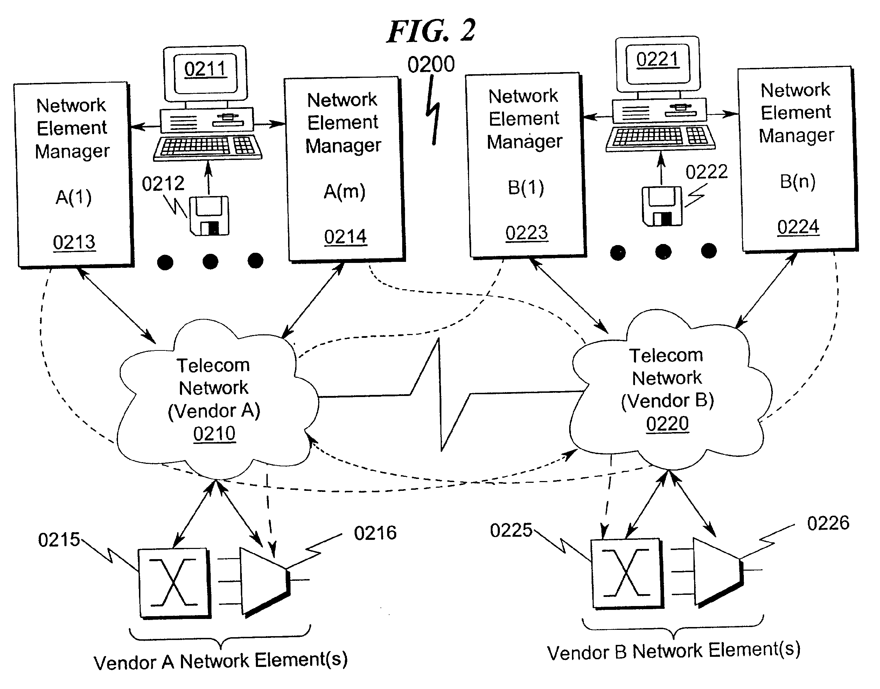

As illustrated in FIG. 2, the present invention may have application (among others) in situations where there are one or more telecommunications networks (**0210, 0220**) that may or may not contain equipment from different vendors. The network equipment elements (NE) used within these networks (**0215, 0216, 0225, 0226**) may take many forms, including but not limited to switch gear, multiplexers, and the like. These network elements (**0215,** **0216, 0225, 0226**) are generally under control of one or more computer systems (**0211, 0221**) that are controlled by computer software (**0212, 0222**) that may be stored on a variety of storage media. This computer software generally takes the form of one or more network element managers (**0213, 0214, 0223, 0224**) that control and monitor the network elements (**0215, 0216, 0225, 0226**) that comprise constituent components of the telecommunication networks (**0210, 0220**). In these circumstances, the present invention may deal specifically with implementations of the event transport architecture (ETA) as it relates to the overall control and monitoring of the various network elements (**0215, 0216, 0225, 0226**) within the context of one or more telecommunications networks (**0210, 0220**).

### BACKGROUND AND DESCRIPTION OF THE PRIOR ART

### Overview

Many distributed software solutions exchange large amounts of data by way of events. These events must be transported efficiently from initial event suppliers to final event consumers. In complicated systems, the transport mechanisms are usually a set of event channels. The number and event content of the channels depends upon the application. To complete the event transport architecture (ETA), the initial event suppliers and event consumers must be connected to the event channels.

Constructing the ETA is a challenge. At runtime, the best ETA must be selected based upon application deployment issues, performance, and usage of 3^{rd} party products. Once selected, the ETA must be constructed in an application specific order and it must use specified components. The correct number of event channels must be created. The correct suppliers must be connected to the right channels. Finally, the event channels must be accessible to consumers and/or other suppliers.

All the rules about constructing the ETA can be called the ETA policy. In the usual designs of large-scale distributed software, the ETA policy is known to all components. Certain components are responsible to build the event channels. Other components are responsible to connect to the channels as suppliers of events. Yet other components must find the channels to connect to them as consumers of events. Each component for any reason dependent upon the ETA must know the current ETA policy.

This coupling between the ETA policy and all the clients that use the ETA causes a number of problems. Any changes in the policy have widespread effects. A change in event channel quantity, which channel carries which events, where the channels can be found, etc., causes significant software changes in the dependent components. Previously delivered components cannot usually be modified, so they will no longer work in a system where the ETA policy has been changed.

As a result of these coupling problems, the ETA for any application is too inflexible. Changes to meet new requirements, different deployment environments, and different performance expectations may not be made without the highs costs of modifying existing software.

In contrast to this prior art background, the disclosed **Distributed Event Publishing Service (EPS)** is a separate software component that encapsulates the details of constructing any arbitrary ETA. By encapsulating these details, the EPS removes the coupling between the ETA policy and the dependent components. This removes the coupling problems and enables a high degree of flexibility in the design and implementation for the distributed software that uses the ETA.

### Ad Hoc ETA Architectures (0300)

Most large scale distributed software solutions ignore the coupling problems described above. An ETA policy is initially established to meet current requirements. This policy is specified in a design document and published to all developers of the dependent components. When changes need to be made, the specification is updated and republished. Developers then make changes to their code to reflect the new policy.

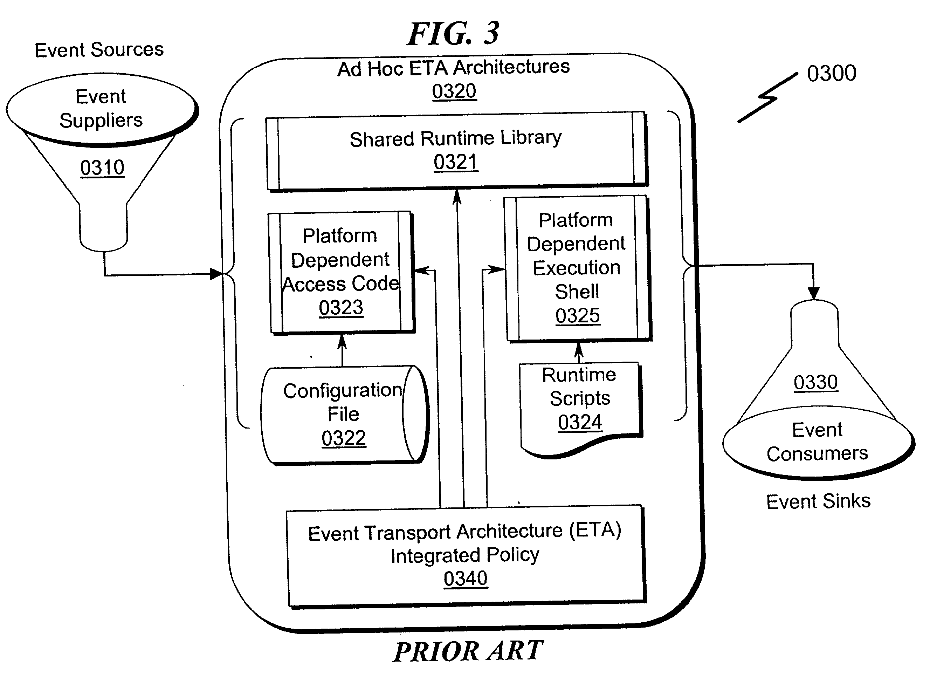

Eventually, ad hoc solutions as illustrated in FIG. 3 (**0300**) are invented when it becomes apparent that the coupling between ETA policy and the dependent components is painful. These ad hoc solutions include shared libraries (**0321**) between applications, that encapsulate the ETA policies (**0340**), configuration files (**0322**) that contain ETA policy details, and a collection of software installation and runtime scripts (**0324**) used to establish the ETA (and thus embody the ETA policy).

The ad hoc solutions (**0300**) have a number of problems. While each solution reduces the coupling between the ETA policy and the source code of dependent applications, it never significantly reduces it. In addition, each solution introduces new problems.

### Runtime Libraries (0321)

Referencing FIG. 3, the runtime libraries (**0321**) solution imposes significant constraints and/or costs on software. Usage of shared libraries (**0321**) means that all applications must have the same implementation language and platform. If these constraints are not acceptable, then multiple language and platform versions must be made. The first limits necessary flexibility in the development of applications and the second is complicated and costly. In addition, any changes in the ETA policy require the release of new updated libraries to all dependent components. Maintaining software configuration control of the libraries and their dependent applications will require significant resources.

### Configuration Files (0322, 0323)

Referencing FIG. 3, the configuration file (**0322**) approach is better than the shared library approach (**0321**), but it is also a flawed solution. By placing ETA policy (**0340**) details in text files (**0322**) some dependencies in application code are removed. In addition, the text files (**0322**) are platform independent. Instead, the details about the file structure, location and content must still be accurately shared across all dependent applications. If even one application has the wrong data in its configuration file, then the whole system will not work. Furthermore, platform dependent access code (**0323**) must still be written to access the configuration files. If the ETA policy (**0340**) changes enough to change the structure or content of the configuration file (**0322**), then all code that reads the configuration file (**0322**) must also be changed. This simply defers the coupling problems to a different layer of the application.

### Runtime Scripts (0324, 0325)

Referencing FIG. 3, using a collection of installation and runtime scripts (**0324**) is a common solution to offload the responsibilities of properly constructing the ETA (**0340**) from application components. Although the coupling is reduced, new problems are introduced by the nature of the scripts. Script performance is usually much slower than that of compiled applications. Scripts require an execution shell (**0325**). This shell (**0325**) is usually platform dependent, so different types of scripts may be needed for different platforms. Scripts may easily call other applications, but it is usually difficult or complicated to arrange the reverse. This makes scripts (**0324**) static and unresponsive to component runtime behavior. A collection of scripts is difficult to maintain when changes occur. Producing and maintaining the scripts (**0324**) usually requires a different skill set than the development of other components, increasing the staffing level and associated costs.

### OBJECTIVES OF THE INVENTION

Accordingly, the objectives of the present invention are (among others) to circumvent the deficiencies in the prior art and affect the following objectives:
- (1): To reduce software maintenance overhead associated with Element Management Systems.
- (2): To reduce the coupling between ETA policy and the mechanisms used to implement event channel processing.
- (3): To eliminate the requirement that runtime libraries be updated to incorporate changes in ETA policy.
- (4): To eliminate the tight linkages present in configuration file based ad hoc approaches to ETA architecture management.
- (5): To increase the processing speed of ETA management as compared to ad hoc runtime script methodologies.
- (6): To reduce platform dependence in ETA policy implementations.

While these objectives should not be understood to limit the teachings of the present invention, in general these objectives are achieved in part or in whole by the disclosed invention that is discussed in the following sections. One skilled in the art will no doubt be able to select aspects of the present invention as disclosed to affect any combination of the objectives described above.

### BRIEF SUMMARY OF THE INVENTION

### Overview (0100)

The present invention as embodied in an Event Publishing Service (EPS) is a separate, runtime component with a public interface accessible to other components by the chosen distributed software technology. As illustrated in FIG. 1 (**0100**) it encapsulates all the significant details of the ETA policy (**0140**). It is the sole component that will construct the ETA and connect suppliers to the appropriate event channels. It can make the event channels (**0120**) available using typical object lookup mechanisms (such as the CORBA Naming Service for CORBA systems) or provide direct access to the event channels upon request.

The EPS removes all significant coupling between the ETA policy (**0140**) and other software components (**0110, 0120, 0130**). Supplier components (**0110**) must have a simple interface for registering for events. Consumer components (**0130**) use a simple interface to obtain the event channels (**0120**). All other coupling is removed.

Unlike shared, runtime libraries (**0321**), the EPS can be developed in any software language. If different EPS versions are necessary for different hardware platforms, this does not affect the other components. This is because the components only access the EPS through its public interface, which is platform independent.

As the EPS is a discrete component, there is no need to share lots of information with lots of components as must be done with the configuration file solution (**0322, 0323**). Components find the EPS, using standard object lookup techniques, instead of having to find (**0323**) configuration files (**0322**) on accessible file systems. The possible lack of consistency in multiple configuration files is replaced by having all components access the same thing, the EPS.

Unlike scripts (**0324**), the EPS has a public interface for the other components. It can interact with these components as needed. As a separate component, maintenance of the EPS is much easier than a disparate set of scripts. The EPS can be compiled, improving its performance over that of interpreted scripts. In contrast to scripts, the EPS can be built using the same technology, and associated skill sets, as other application components. As a binary application, the EPS does not require a separate execution shell (**0325**), only the standard execution loader of the operating system.

Because the EPS is a standalone component with a public interface, it can offer features that the other adhoc solutions cannot. It can be developed to provide construction of new ETA at runtime upon request by other components. It can have public interfaces for obtaining performance metrics about the ETA itself, such as the number of channels, suppliers, consumers etc. It can manage the ETA at runtime, making changes as it detects differences in usage or performance. It can create different ETAs for different types of clients, acting as a gateway component to 'foreign' clients, as exemplified by the network element management application of FIG. 2 (**0200**).

### Exemplary Advantages

By significantly reducing coupling, the EPS enables greater flexibility in the ETA with lower cost than other solutions. Although it is difficult to quantify, it is not unreasonable to expect that using the EPS will result in a reduction in life-cycle costs by a factor of two to ten, depending upon the number of other components, over other solutions.

The EPS enables significant ETA features that are not feasible with the other solutions. Any market value of these features gives the EPS a significant advantage over the other solutions. While it may be difficult to actually estimate the market value of these features, they do represent a significant market advantage when compared to the prior art.

While the EPS is primarily useful in fairly sophisticated distributed applications, this target application directly supports complex Network Management applications as exemplified by those illustrated in FIG. 2 (**0200**). While very small, non-scalable applications may not significantly benefit from the EPS, this is not a significant disadvantage for Network Management and other distributed applications as these are generally not simple applications.

Like the other solutions, the EPS must be built based upon specific application requirements. While it is generally not feasible to build a single EPS solution to fully span the range of all possible applications, it is possible to construct EPS systems utilizing the teachings described herein to provide specific event messaging to any particular system or group of systems.

### BRIEF DESCRIPTION OF THE DRAWINGS

For a fuller understanding of the advantages provided by the invention, reference should be made to the following detailed description together with the accompanying drawings wherein:
FIG. 1 illustrates a generalized system overview of the present invention;
FIG. 2 illustrates an exemplary architectural overview of how the present invention interfaces into an integrated multi-vendor network management system incorporating computer monitoring, configuration, and the like via software control;
FIG. 3 illustrates prior art ad hoc approaches to providing particular implementations of Event Transport Architecture Policy;
FIG. 4 illustrates the relative complexity associated with the prior art in supporting multiple event consumers and event suppliers;
FIG. 5 illustrates an exemplary communication data flow diagram showing the event transport methodology utilized by the present invention;
FIG. 6 illustrates the relative complexity associated with the present invention in supporting multiple event consumers and event suppliers;
FIG. 7 illustrates exemplary event traffic associated with the present invention when supporting multiple event consumers and event suppliers;
FIG. 8 illustrates how the present invention may be expanded to incorporate channel chaining in support of multiple disparate and/or distributed network event subdomains;
FIG. 9 illustrates an exemplary software interface supporting a preferred embodiment of an Event Publishing Service (EPS);
FIG. 10 illustrates an exemplary network management application incorporating an embodiment of the disclosed EPS system and method;
FIG. 11 illustrates an exemplary method flowchart illustrating a preferred Event Publishing Service (EPS) embodiment;
FIG. 12 illustrates an exemplary method flowchart illustrating a preferred EPS Read Configuration File embodiment;
FIG. 13 illustrates an exemplary method flowchart illustrating a preferred EPS Build/Connect Channels embodiment;
FIG. 14 illustrates an exemplary signal flowchart illustrating a preferred EPS Connection Activity embodiment methodology;
FIG. 15 illustrates an exemplary signal flowchart illustrating a preferred ETA Construction embodiment methodology;
FIG. 16 illustrates an exemplary relationship between an Event Publishing System (EPS) as described herein and signal transmission flows between event suppliers and event consumers in the context of a diverse communications network.

### DESCRIPTION OF THE PRESENTLY PREFERRED EXEMPLARY

### EMBODIMENTS

While this invention is susceptible of embodiment in many different forms, there is shown in the drawings and will herein be described in detailed preferred embodiment of the invention with the understanding that the present disclosure is to be considered as an exemplification of the principles of the invention and is not intended to limit the broad aspect of the invention to the embodiment illustrated.

The numerous innovative teachings of the present application will be described with particular reference to the presently preferred embodiment, wherein these innovative teachings are advantageously applied to the particular problems of a DISTRIBUTED EVENT PUBLISHING SERVICE SYSTEM AND METHOD. However, it should be understood that this embodiment is only one example of the many advantageous uses of the innovative teachings herein. In general, statements made in the specification of the present application do not necessarily limit any of the various claimed inventions. Moreover, some statements may apply to some inventive features but not to others.

### Definitions

Throughout the discussion in this document the following definitions will be utilized:

### System Blocks / Procedural Steps Not Limitive

The present invention may be aptly described in terms of exemplary system block diagrams and procedural flowcharts. While these items are sufficient to instruct one of ordinary skill in the art the teachings of the present invention, they should not be strictly construed as limiting the scope of the present invention. One skilled in the art will be aware that system block diagrams may be combined and rearranged with no loss of generality, and procedural steps may be added or subtracted, and rearranged in order to achieve the same effect with no loss of teaching generality. Thus, it should be understood that the present invention as depicted in the attached exemplary system block diagrams and procedural flowcharts is for teaching purposes only and may be reworked by one skilled in the art depending on the intended target application.

### Personal Computer Not Limitive

Throughout the discussion herein there will be examples provided that utilize personal computer (PC) technologies to illustrate the teachings of the present invention. The term 'personal computer' should be given a broad meaning in this regard, as in general any computing device may be utilized to implement the teachings of the present invention, and the scope of the invention is not limited just to personal computer applications.

### Internet/Intranet Not Limitive

Throughout the discussion herein the terms Internet and Intranet will be used generally to denote any network communication system or environment. Generally the term Intranet will denote communications that are local to a given system or user, and Internet will describe communications in a more distant local. One skilled in the art will recognize that these terms are arbitrary within the contexts of modern communication networks and in no way limitive of the scope of the present invention.

The present invention specifically anticipates that in some implementations the GUI development framework (and/or its runtime component) will communicate with the data used to drive the GUI over the Internet. Thus, the application driving the user interface may reside on one computer system and the data used for presentation and control may be contained somewhere else on another computer system and be accessed via any number of networking protocols.

### Application Programming Interface (API) Not Limitive

While the present invention may be in part implemented using standard Application Programming Interfaces (APIs) such as Software Development Kits (SDKs) and the like, there is no requirement that the present invention be implemented using these tools. Note also that the framework of the present invention may be incorporated into standard toolkits and the like which may or may not be integrated into an API framework for use in standard software development frameworks.

### Operating System Not Limitive

Additionally, while the present invention may be implemented to advantage using a variety of Microsoft® operating systems (including a variety of Windows™ variants), nothing should be construed to limit the scope of the invention to these particular software components. In particular, the system and method as taught herein may be widely implemented in a variety of systems, some of which may incorporate a graphical user interface. Some examples of these include HP-UX™, LINUX™, SOLARIS, and UNIX™ (and its variants), among others.

### Data Structures Not Limitive

The present invention may be embodied in a variety of data structures in some preferred embodiments. However, the form of such data structures as described herein is only exemplary. One skilled in the art would quickly realize that a wide variety of other data structures could be used equivalently in this application. Therefore, no data structure contained herein should be interpreted as limiting the scope of the present invention.

### Communication Media Not Limitive

The present invention may be embodied to affect transport of event channel information over a variety of communication media. However, the signal format used to transmit such transmissions as described herein is only exemplary. One skilled in the art would quickly realize that a wide variety of other communication media could be used equivalently in this application. Therefore, no communication media contained herein should be interpreted as limiting the scope of the present invention.

### CORBA Not Limitive

The present invention may be implemented using the CORBA object oriented framework in some preferred embodiments. However, the form of implementation described herein is only exemplary. One skilled in the art would quickly realize that a wide variety of other object oriented frameworks could be used equivalently in this application. Therefore, no framework contained herein should be interpreted as limiting the scope of the present invention.

A detailed technical description of the Naming Service used within the context of the various exemplary embodiments of the present invention can be obtained by referring to the CORBA Standard Services documentation ("The Common Object Request Broker: Architecture and Specification" at ftp://ftp.omg.org/pub/docs/formal/98-12-01.pdf).

A detailed technical description of the Notification Service used within the context of the various exemplary embodiments of the present invention can be obtained by referring to the 1998 Object Management Group (OMG) Notification Service, Joint Revised Submission, November 1998, OMG TC Document telecom/98-11-01, BEA Systems et. al. (ftp://ftp.omg.org/pub/docs/formal/).

### Overview (0500)

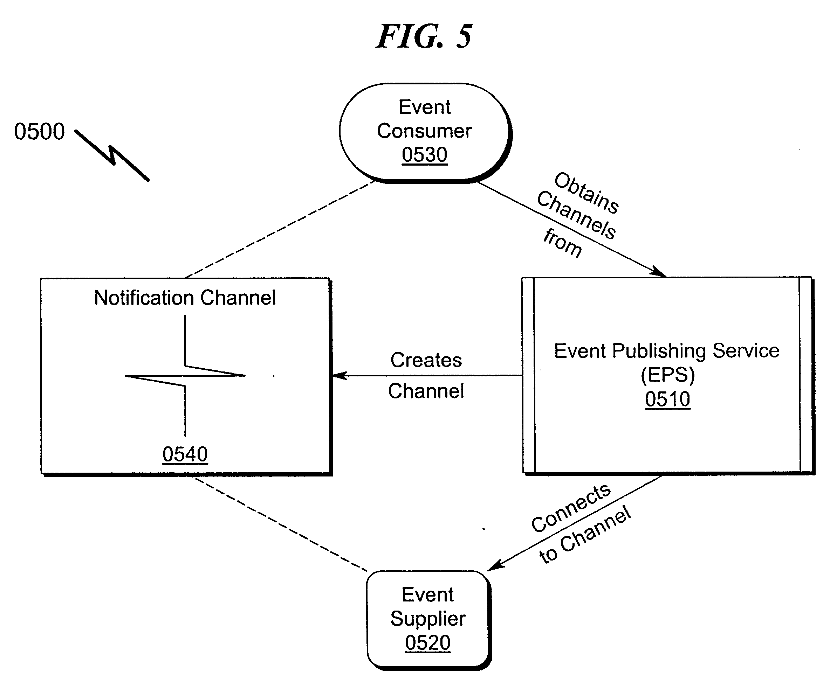

Referencing FIG. 5 (**0500**), the Event Publishing Service (EPS) (**0510**) is an infrastructure service for distributed computing systems using CORBA technology. This service is used to establish and provide access to the event transport architecture (ETA) (**0140**) of a distributed system. In essence, the EPS encapsulates all the information and behavior to be used to construct a set of notification channels (**0540**), using the CORBA notification service, and to connect these channels to deliver events from the Suppliers (**0520**) to the ultimate Consumers (**0530**).

### Roadmap

The following discussion briefly describes the problem that occurs when simple ETAs are used. This provides the general principles that drive the design of the EPS. This is followed by a description of the EPS in some detail, including examples of its flexibility in constructing ETAs. An exemplary prototype system using the EPS concept is then described and the discussion then illustrates how the system and method may be applied to generalized event signaling problems.

It is assumee that the reader is familiar with CORBA and related Common Object Services. In particular, the reader should know the specifications and usage of the Notification Service. We use concepts from this service throughout the white paper. See 1998 Object Management Group (OMG) PDF document "The Common Object Request Broker:
Architecture and Specification" at
   ftp://ftp.omg.org/pub/docs/formal/98-12-01.pdf; and the 1998 Object Management Group (OMG) Notification Service, Joint Revised Submission, November 1998, OMG TC Document telecom/98-11-01, BEA Systems et. al. (ftp://ftp.omg.org/pub/docs/formal/).

### Problem Statement (0400)

An event transport architecture (ETA), in the context of a CORBA based system, is the arrangement of event Consumers, Suppliers, and notification channels that is used to move events from Suppliers to Consumers.

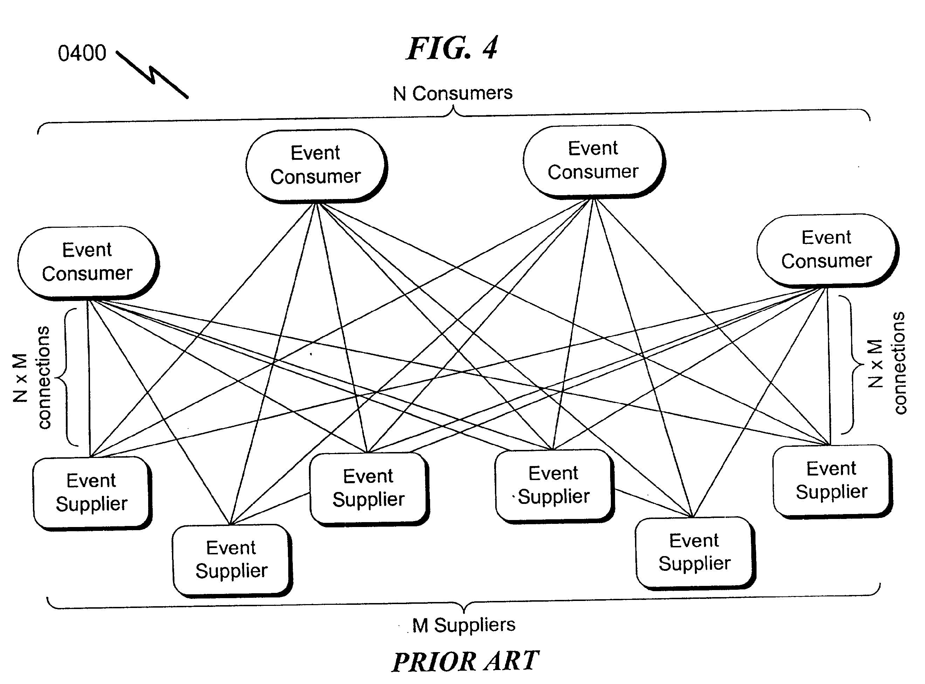

It is not uncommon for an ETA to be relatively simple for small, distributed systems. As illustrated in FIG. 4 (**0400**), a simple ETA is one where every Consumer connects to every Supplier by way of one, or more, notification channels offered by the Supplier of events. Unfortunately, such a simple system is not very scalable, flexible or reliable.

FIG. 4 illustrates a simple ETA. In this case, each Supplier has one or more notification channels embedded in it for event delivery. Note that the number of connections scales by the number of Consumer times the number of Suppliers. As a new Supplier is added, all Consumers must connect to its notification channels. As a new Consumer is added, it must connect to all Suppliers in order to receive events. The actual form of the connection, whether push or pull, and type of event, whether sequenced, structured or un-typed does not affect the architecture.

Thus, this simple architecture suffers from an N number of Consumers times M number of Suppliers complexity of connections. This type of architecture has a number of other known problems:
- Every Consumer must know about every Supplier. This complicates initial communication and any recovery from Consumer/Supplier failures or restarts.
- Suppliers must 'hardwire' assumptions by the Consumers about the number, type and characteristics of notification channels offered by each Supplier. Any changes to these assumptions require that code be rewritten.
- Every Supplier has a reference (typically a **ProxyConsumer** object) for every Consumer. A large number of Consumers can put a significant runtime burden on the process that implements the supplier.
- The ETA is not flexible. Initial Consumer expectations constrain future possibilities.

These issues all stem from the rigid (bad) coupling that exists between the Consumers and Suppliers. All the architectural details and complexity is known by all components. Hence, any change to the architecture requires that all components change. The solution is to encapsulate this information into a separate component.

### Exemplary Invention Embodiment Architecture (0500, 0600)

The Event Publishing Service is a separate component that encapsulates the details of a desired ETA. It is responsible for establishing the ETA for the runtime system. The EPS uses primitive interfaces of the Suppliers, configuration information supplied by the system designer and standard CORBA services to construct an ETA.

FIG. 5 (**0500**) illustrates the exemplary relationships between the EPS (**0510**), Suppliers (**0520**), Consumers (**0530**), and notification channels (**0540**). The EPS (**0510**) itself does not need to host (be the CORBA object server of) any of the other elements, including the notification channels (**0540**). The latter are better supplied by a variety of commercial Notification Service implementations.

At runtime, the EPS (**0510**) would read some configuration information specifying the desired ETA. It would also find a CORBA object in each Supplier (**0520**) that could be used to connect the Supplier (**0520**) process to a notification channel (**0540**). These objects could be found either by a Naming Service or other means.

The EPS (**0510**) then creates notification channels whose characteristics fit the desired ETA. It would then connect each Supplier (**0520**) to the notification channels (**0540**) as necessary. Filters could be given to the Suppliers (**0520**) so that event type specific notification channels could be part of the ETA.

After the ETA is constructed, the EPS (**0510**) could respond to requests by Consumers (**0530**) to register for specific events. Consumers (**0530**) could specify the desired event characteristics, perhaps by using properties as defined in **CosTrading**. See the 1998 Object Management Group (OMG) CORBAservices: Common Object Services Specification, Revised Edition, OMG TC Document 98-12-09, Object Management Group (ftp://ftp.omg.org/pub/docs/formal/98-12-09.pdf). The EPS (**0510**) could then automatically connect the Consumer (**0520**) to the appropriate notification channel (**0540**), or simply return the reference to the desired notification channel.

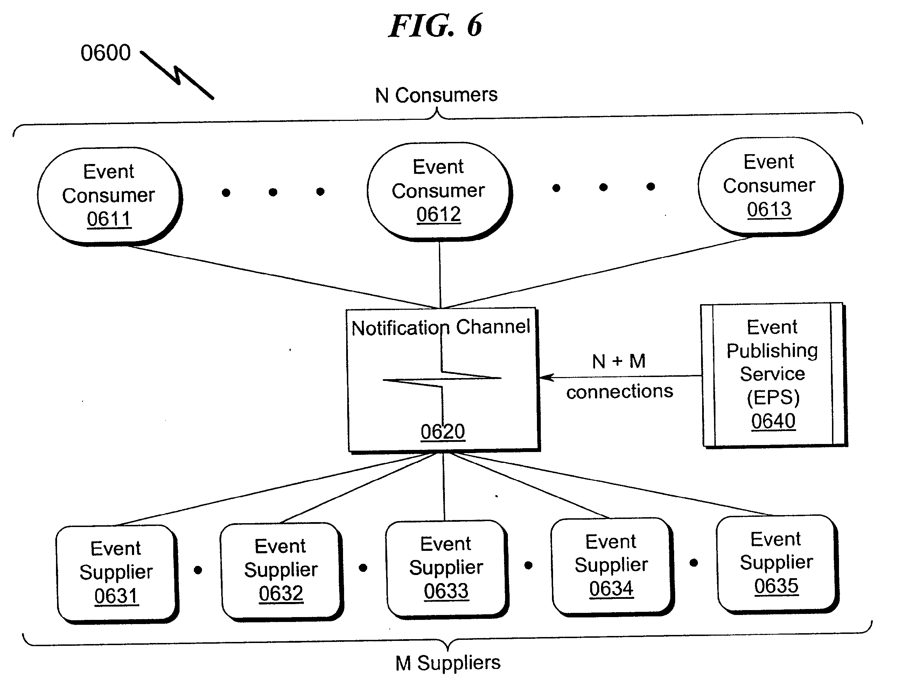

A typical ETA that could be constructed by an EPS is shown in FIG. 6 (**0600**). This is an improved architecture over the previously described simple ETA illustrated in FIG. 4 (**0400**). The number of connections is now reduced and scalability grows by N plus M rather than N times M.

### Exemplary Distributed Architecture Embodiment

The EPS is an example of an infrastructure service that simplifies the operation of an entire distributed computing solution. When designing an architecture for a distributed computing system it is often necessary to define infrastructure services that reduce the complexity of other components.

The CORBA services themselves are also examples of infrastructure services. In this case, the services are generic and meant to be used in any kind of system. However, the CORBA services are often too primitive to meet the needs of a large scale and flexible architecture. Additional services usually need to be added.

### Simple Interfaces For Other Components

The EPS works because it doesn't require significant knowledge on the part of the components that it interacts with. Indeed, the Consumers and Suppliers that the EPS works with should have fairly simple interfaces and behavior.

Element Common Object Model (ECOM) (see ECOM Notification Requirements, Version 1.2.6, 9/25/2000, Alcatel TSD-USA Network Management Group) defines such a simple interface for suppliers. In ECOM, there is an object for creating supplier proxies. The ECOM process has no other built-in requirements, such as hosting a specific number of notification channels emitting certain types of events. The ECOM process is expected to register a single object, the **ElementManager**, in the name service. All other objects can be obtained by calling operations on the **ElementManager**. An EPS could use such a simple interface to obtain references to event related objects to connect the ECOM process to notification channels.

A Consumer process is equally simple. It only needs to get a reference object for the EPS and make requests for notification channels.

### Application of EPS in a TMN System

In a classic Telecommunications management network (TMN) architecture (see CCITT Recommendation M.3010 (1996), Principles for a telecommunications management network (http://www.itu.int/itudoc/itu-t/rec/m/)), there exists a logical layer architecture for management functions. Two of these layers are the **Network Management Layer (NML)** and **Element Management Layer (EML).** Software systems in these layers are respectively called **Network Management Systems (NMS)** and **Element Management Systems (EMS).** In TMN, NMS applications need to obtain events from multiple EMS components, as illustrated in FIG. 2 (**0200**).

**The EPS described herein is not in either layer. Rather, it exists to facilitate the relationship between the NMS and EMS elements.** Generally, the EPS creates the notification channel architecture and connect the EMS components to it. Then, when an NMS needed to obtain events, it would register with the EPS. This would ensure that each NMS received events from the collection of EMS systems that the EPS handled.

### CORBA Interface (0900)

The CORBA interface for an EPS is fairly simple. There exists a single **EventPublisher** object that would be registered in the **Naming Service.** Consumers would get a reference to the **EventPublisher** via the Naming Service.

At a minimum, the **EventPublisher** would have an access operation. This operation would return a Notification Channel reference (actually a **CosNotifyChannelAdmin::EventChannel**) based upon a set of properties. Using this reference, a Consumer could engage in the standard Notification Service connection sequence. If no channel matched the properties, then a nil reference would be returned.

For convenience, another operation could exist that would register the consumer with the appropriate channel and return a **ProxySupplier** for the Consumer to use. The EPS would automatically register the Consumer with the **ProxySupplier**. An identification value would also be returned so that other operations, such as administrative, could be performed with the **ProxySupplier**.

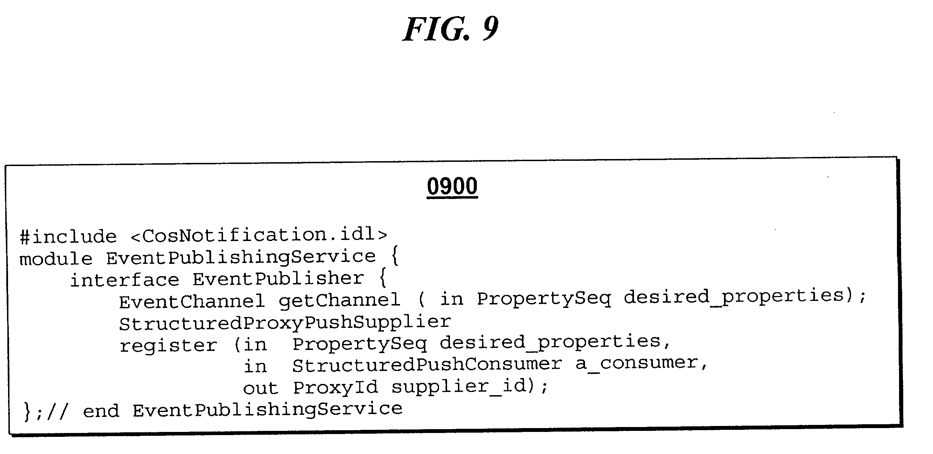

An exemplary IDL interface that is based upon a push communication model with structured events is illustrated in FIG. 9 (**0900**). Specifications for the valid properties in the **desired_properties** parameter have to be defined. However, typical usage would be properties that define the type of structured event desired (such as Alarms), aspects about the event type that are of interest (such as severity of an alarm) etc. The EPS could be extended to even include **CosNotifyFilter::Filters** as arguments that the EPS would use to pass onto all known Suppliers or to modify the filtering of notification channels on behalf of a specific Consumer.

Of course, other functionality could be added. For example, it may be useful to have another interface that supports administrative operations such as adding/deleting/modifying/listing notification channels that the EPS manages, monitoring which Consumers are registered and which Supplier are known to the EPS etc.

### Commercial Value of EPS

The commercial value of the EPS is generally not in the specific CORBA interface services that it offers. Rather, it is a solution to decoupling the expectations of components in a distributed system. In this case, the value of the EPS at runtime is its behavior in constructing, and subsequent management of, the ETA for the runtime system. With this type of solution, decisions about the ETA do not impact the processes that act as Consumers or Suppliers. Changes in the ETA will not require that either Consumers or Suppliers be modified.

With Supplier information encapsulated in the EPS, handling failures is simplified. When a Supplier fails, no Consumer need take any action. They will just not receive any events. When the Supplier restarts, the EPS re-connects it to the appropriate channel and events start flowing again. Resynchronization capabilities between Consumers and failed Suppliers could also be handled by the EPS.

When a Consumer fails, no Supplier need be affected. An implementation of the Notification Service can be chosen that supports event and connection persistency. In this kind of service, when the Consumer reconnects, the notification channel will send all events since the last time the Consumer was connected. This behavior is accomplished without effort on the part of Suppliers.

### Alternative ETA Applications (0700, 0800)

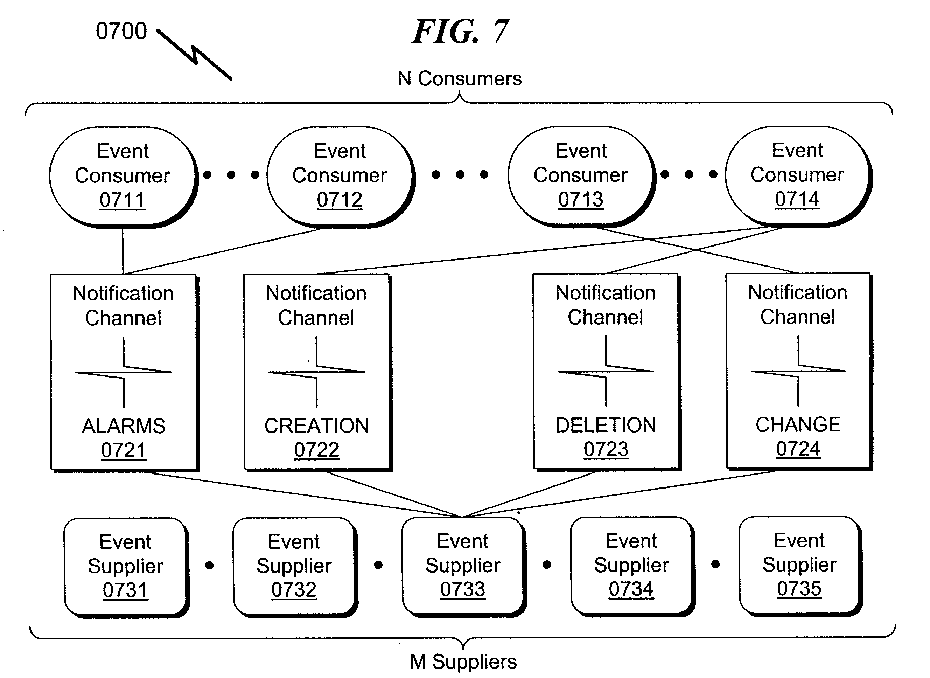

The event transport architectures that are possible with the disclosed EPS architecture are not limited to those illustrated in FIG. 6 (**0600**). For example, it would be relatively simple, using EMS components supporting the ECOM interface, to construct an ETA as illustrated in FIG. 7 (**0700**). In this architecture, a number of notification channels exist. Each is specialized to carry a specific type of event. The EPS would connect each EMS to each channel, specifying a filter (**0721, 0722, 0723, 0724**) that would produce the correct event type. Consumers could then get a channel that is very efficient for transporting a specific event that is of interest to them. This architecture could simultaneously coexist with other notification channels constructed for other purposes.

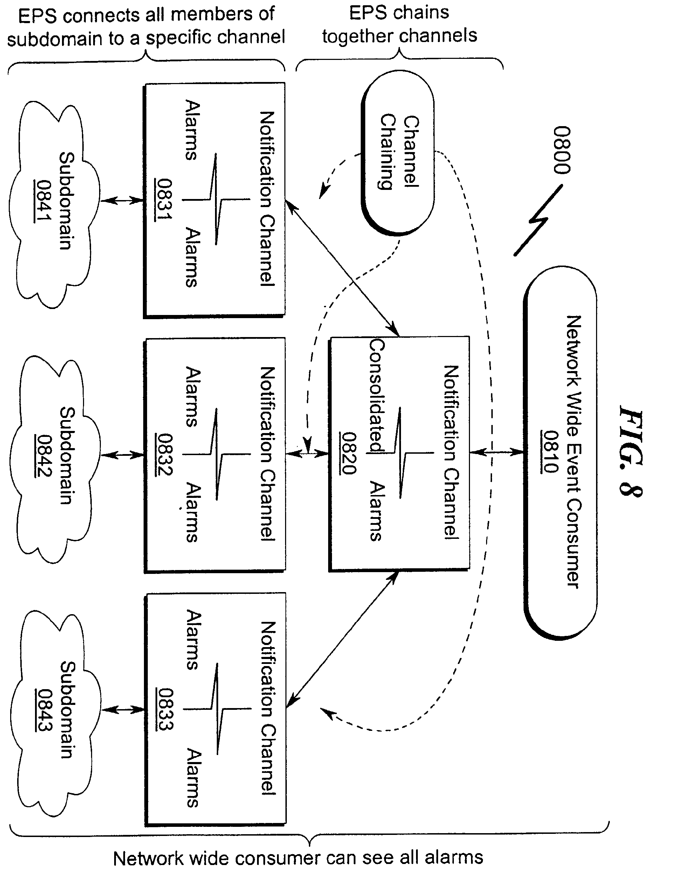

Additionally, as illustrated in FIG. 8 (**0800**), an ETA may support a more complex network management model. In this case, there are a large number of EMS components, each organized into various sets that represent sub-networks (**0841, 0842, 0843**). The events from each sub-network (**0841, 0842, 0843**) get consolidated into another notification channel (**0820**) that is used to transport events to a Consumer (**0810**) that wants a network wide view of Alarms. This kind of structure results from chaining notification channels together, the output from one becoming the input to another. This kind of ETA could be constructed by an EPS with knowledge of the sub-networks, but not of the EMS components within each sub-network. The higher level EPS would simply query the EPS for each sub-network to get the appropriate notification channel references.

Many other possibilities exist. Indeed, one advantage of an EPS is that the runtime ETA can be defined on a per runtime basis or even dynamically modified as needed. All this is feasible without having to alter either Consumer or Supplier behavior.

### Exemplary Advantages

While one skilled in the art will quickly recognize many advantages of the present invention over the prior art, some of the following are noteworthy in some of the preferred embodiments.

### Simplicity

The EPS simplifies the implementation of an ETA. Participating components, like Consumers and Suppliers do not have to have ETA logic within them.

Complicated schemes for providing access to notification channels by way of name lookup can be avoided as the EPS can provide a means to find the channels.

Usage of standard CORBA services, such as the Notification Service, means that the EPS isn't complicated by having to actually transport the events.

### Scalability

The EPS can be used to construct an ETA that is more scalable than in the direct Consumer to Supplier connection model.

### Decoupling

Removal of the coupling between Consumers and Suppliers in constructing an ETA has a number of significant advantages.

### Lower Maintenance Costs

When changes in the ETA must be made, implementations of Consumers and Suppliers are unaffected. This lowers maintenance costs. Certainly, the EPS itself may have to be modified but this is far better than having to update a large number of other implementations, some of which are in the field.

### Dynamic Capabilities

ETAs can be defined at runtime. They can be modified while the system is running with a suitable EPS. This can all be done without affecting Consumers and Suppliers.

The EPS can be the sole component responsible for dealing with Consumer and Supplier failures and/or restarts. This reduces the burden on other components to provide processing logic to deal with these dynamic situations.

### Flexibility Features

ETAs can be defined to fit a specific customer's need and not have to follow a one size fits all strategy. ETAs can be defined that follow the hierarchical complexity of the system, as FIG. 8 (**0800**) shows. ETAs can be defined for different event delivery strategies.

### Disadvantages

Like all engineering solutions, the EPS has some disadvantages as well. Use of the EPS requires that another process be designed and implemented and managed at runtime. There is an additional level of indirection between Consumers and Suppliers. This means that an event might get sent multiple times as it goes through the ETA. One skilled in the art will recognized that through proper software development methodologies these disadvantages may be limited in most embodiments of the present invention.

### Exemplary ECOM Prototype (1000)

### Overview

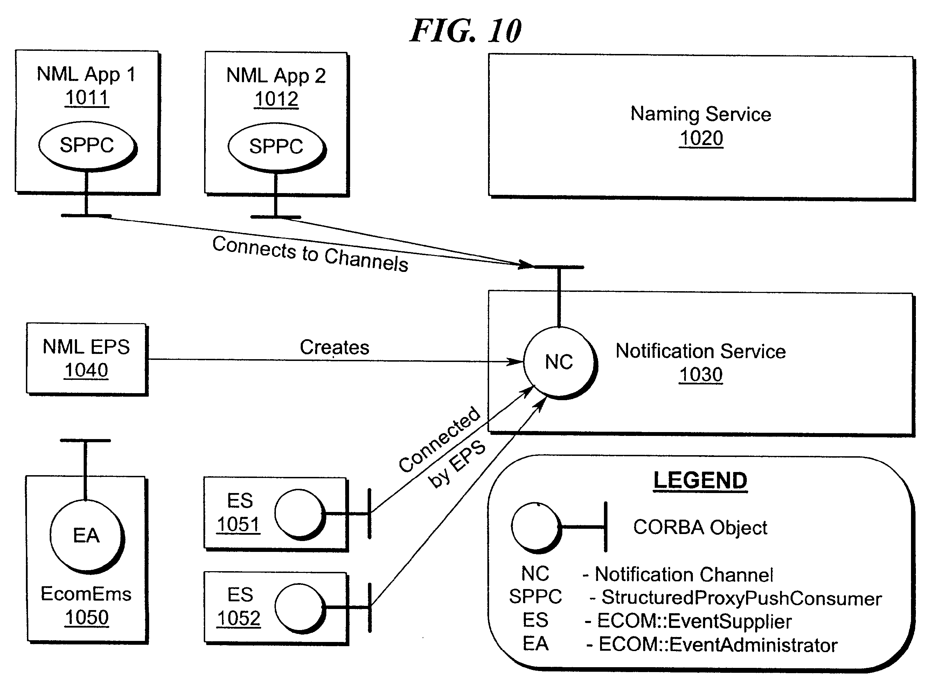

In order to validate some aspects of the ECOM interface and explore the concept of the EPS, a prototype as illustrated in FIG. 10 (**1000**) was constructed. This prototype also demonstrated usage of a variety of commercial implementations of the Notification Service.

A preferred version of the prototype may be constructed using ORBacus' products and implemented with a mix of C++ and Java. The prototype can be operated on an HP780 platform running HP-UX 10.2, although the present invention is not limited to a particular operating system, application programming interface, or hardware platform.

### Architecture

There are six types of processes in the prototype. FIG. 10 (**1000**) illustrates the processes and their relationships:
The NML App (**1011, 1012**) processes represent NML applications that wish to get events. When an NML App (**1011, 1012**) starts, it looks for a reference to a notification channel in the naming service (**1020**).
The **EcomEms** process (**1050**) represents an EMS application that has an ECOM interface. ECOM provides for two CORBA objects for event transport. The first is **EventAdministrator** that is used as a factory to create the second, **EventSupplier** (**1051, 1052**). The latter object is similar to the **ProxySupplier** objects in the Notification Service (**1030**). See ECOM Notification Requirements, Version 1.2.6, 9/25/2000, Alcatel TSD-USA Network Management Group. Note that in the prototype, the **EventSupplier** objects are in separate processes (**1051, 1052**). This was done to experiment with different implementation languages. This further demonstrates the flexibility of CORBA systems in that object location is transparent to interface definition.
The NML EPS (**1040**) process carries out the behavior of an EPS. When the NML EPS (**1040**) starts, it creates a notification channel in the NML visible Notification Service. It takes the IOR of that channel and places it in the Naming Service (**1020**) at a well-known location. In the prototype, the NML EPS (**1040**) also has a simple user interface. This interface allows the user to control whether the event suppliers in **EcomEms** (**1050**) are connected to the notification channel that the EPS creates for the NML Apps (**1011, 1012**). The user interface also allows the EPS to control event flow from the **EcomEms** (**1050**) by way of suspend/resume operations and adding/deleting filters. The EPS can perform these actions without any additional behavior by the **EcomEms** (**1050**) or NML Apps (**1011, 1012**). These functions demonstrate how the EPS can dynamically manage an ETA, in this case under direct user control.
The **EcomEms** (**1050**) actually implements its event transport capabilities using another instance of the Notification Service that is not visible to the NML Apps (**1011, 1012**).

### Exemplary EPS Method (1100)

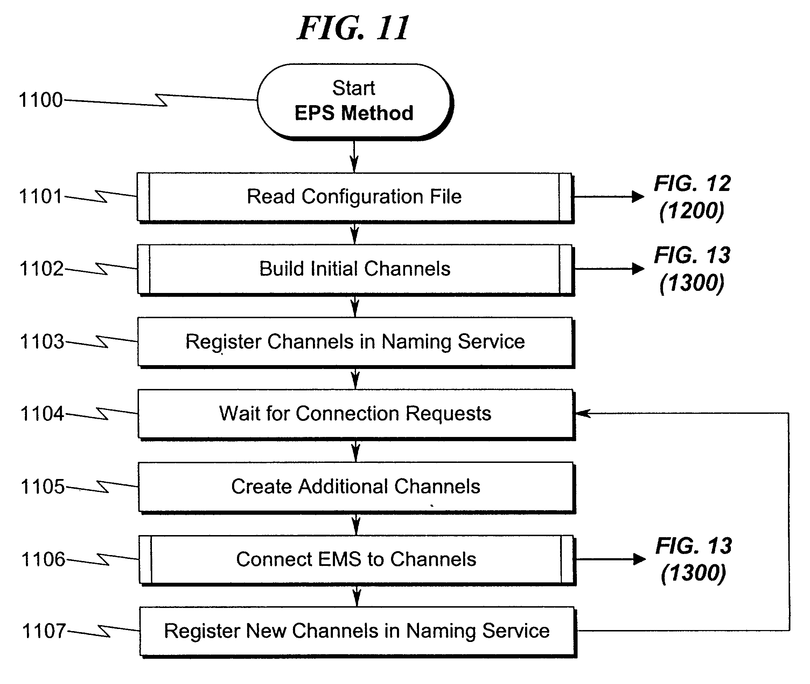

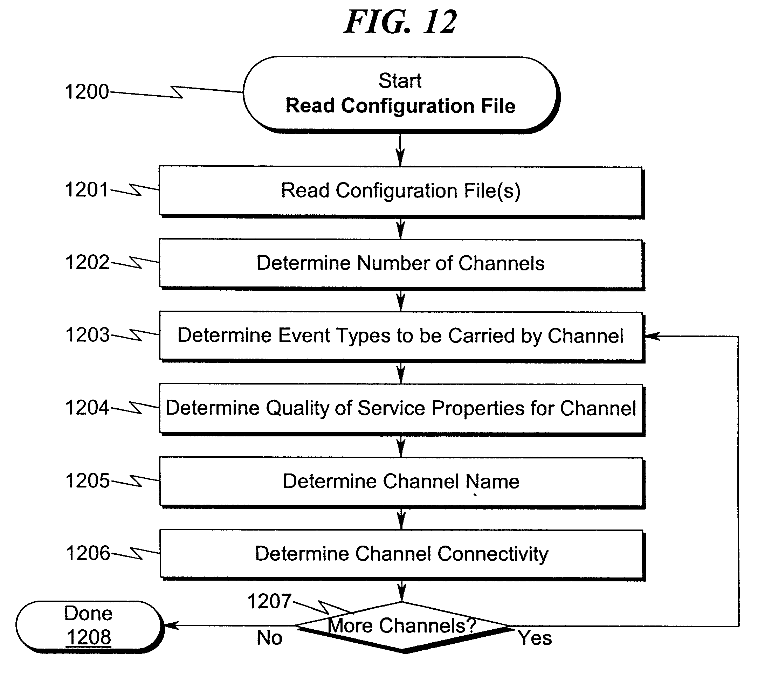

As illustrated in FIG. 11 (**1100**), an exemplary EPS Method (**1100**) can be implemented using the following steps:
Reading Configuration File (**1101**). The configuration file specifies the number of event transport architectures and the details of their construction. This procedural step is further detailed in FIG. 12 (**1200**).
Building Initial Channels (**1102**). The EPS can pre-build sections of the Event transport architecture. These sections are usually static and do not vary when the EPS is contacted. An example is the ECOM Global process channel that is created regardless of the number of EMS systems.
Register Channels in Naming Service (**1103**). In order for event consumers to use the Event Transport Architecture, the channels must be accessible. This means that they must be placed in some Naming Service according to a Naming policy.
Wait for Connection Requests (**1104**). An EMS contacts the EPS to be connected to the external Event Transport Architecture.
Create Additional Channels (**1105**). The EPS creates the necessary channels.
Connect EMS to Channels (**1106**). The EPS connects the channels to the EMS.
Register New Channels in Naming Service (**1107**). The EPS registers the channels in the Naming Server, and proceeds to step 4.
One skilled in the art would no doubt be able to modify the order of execution of the above steps to achieve similar if not identical functionality.

### Read Configuration Method (1200)

As illustrated in FIG. 12 (**1200**), an exemplary EPS Read Configuration File Method (**1200**) that describes what information is obtained from the configuration file and which can be implemented using the following steps:
1. Read Configuration File(s) (**1201**). Depending upon the implementation there may be more than one file. A typical approach is to use XML to describe the configuration data.

Determine Number of Channels (**1202**). The configuration file defines the desired Event Transport Architecture. The ETA consists of a number of channels, the characteristics of each channel and which supplier elements are connected to which channel.

Determine Event Types to be Carried by the Channel (**1203**).

Determine Quality of Service Properties for the Channel (**1204**).

Determine the Channel Name (**1205**).

Determine the Channel Connectivity (**1206**).

Determine if there are more channels (**1207**), and if so, proceeding to step 3.
One skilled in the art would no doubt be able to modify the order of execution of the above steps to achieve similar if not identical functionality.

### EPS Build/Connect Channels Method (1300)

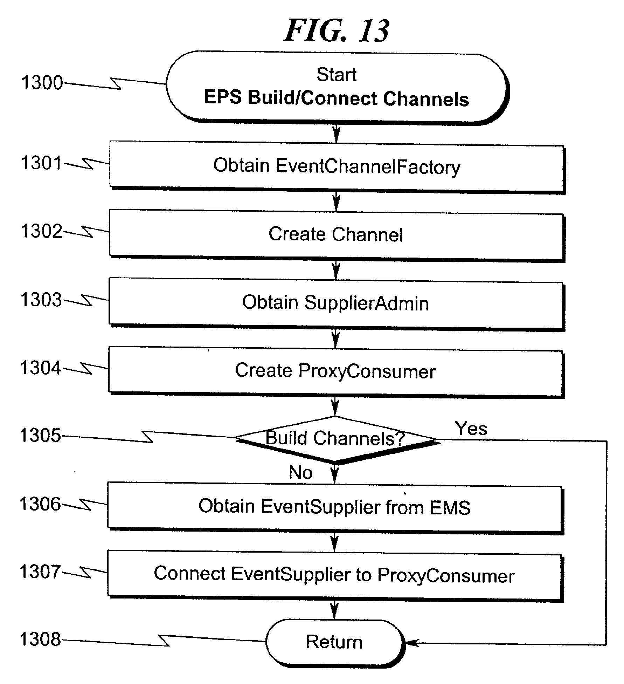

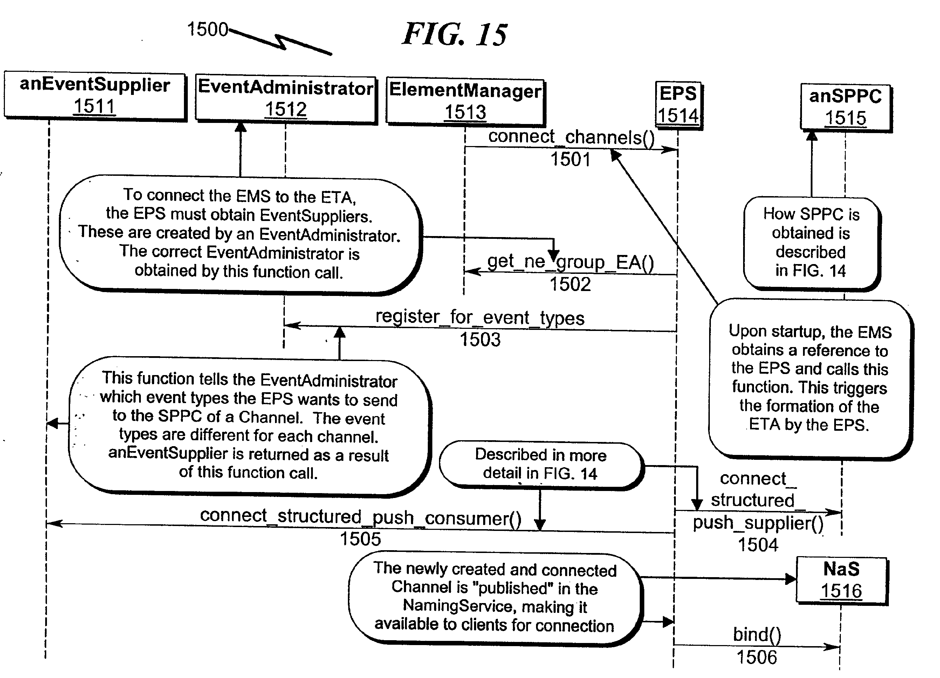

As illustrated in FIG. 13 (**1300**), an exemplary EPS Build/Connect Channels Method (**1300**) that describes the behavior that the EPS uses to create any channel is illustrated. This process is used in the **Create Initial Channels** process (**1102**) block in FIG. 11 as well as the **Create Additional Channels** process (**1106**) block in FIG. 11. This exemplary Build/Connect Channels Method (**1300**) describes the logical steps in creating a channel and connecting the EMS to it. This is done for each kind of channel desired in the ETA. The generalized Build/Connect Channels Method (**1300**) can be implemented using the following steps:
2. Obtain EventChannelFactory (**1301**). The EventChannelFactory is a standard CORBA object in the Notification Service. It is found using the standard CORBA interfaces which are described in the above-mentioned references to the CORBA specification.
3. Create Channel (**1302**). The Factory can create EventChannels. Depending on the ETA, the EPS may further configure the new channel with Quality of Service (QoS) properties.
4. Obtain SupplierAdmin (**1303**). The SupplierAdmin is obtained from the new Channel. It is another standard object 'factory'. It is used to create ProxyConsumers.
5. Create ProxyConsumer (**1304**). SupplierAdmins are used to create ProxyConsumers. There are many types of ProxyConsumers. A common ProxyConsumer is the StructuredProxyConsumer.
6. Determine if this is a build channel request (**1305**), and if so, returning to the procedure caller.
7. Obtain EventSupplier from EMS (**1306**). The EventSupplier is obtained from the EMS. The steps to implement this function are described in FIG. 15 (**1502, 1503**).
8. Connect EventSupplier to ProxyConsumer (**1307**). By connecting the EventSupplier to the ProxyConsumer, events are sent through the Channel. The EventSupplier sends an event to the ProxyConsumer. This event goes through the Channel and is ultimately sent to any event Consumers on the Channel.
9. Return to the procedure caller.
One skilled in the art would no doubt be able to modify the order of execution of the above steps to achieve similar if not identical functionality.

### EPS Connection Sequence Signal Flow (1400)

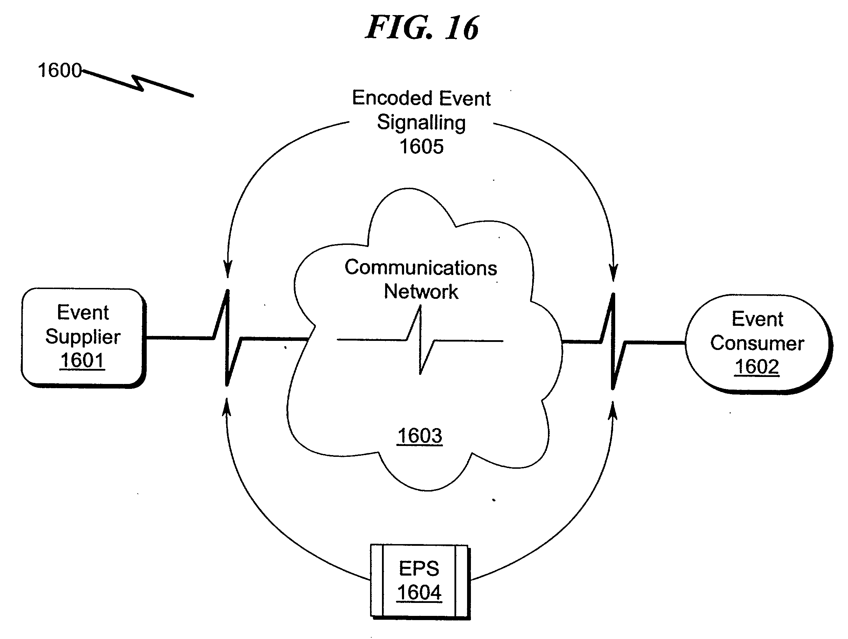

The present invention may also be applied to a wide variety of situations in which event signal flows are communicated via various components within a computer network, as illustrated in FIG. 2 (**0200**) and FIG. 16 (**1600**). Within this context, the connection sequence signal flows are such that any communication encoding means may be used to transport the messages between the various system components within the system. Thus, one embodiment of the present invention deals specifically with the signal flows that may be encoded within the communication medium to affect a distributed event publishing service.

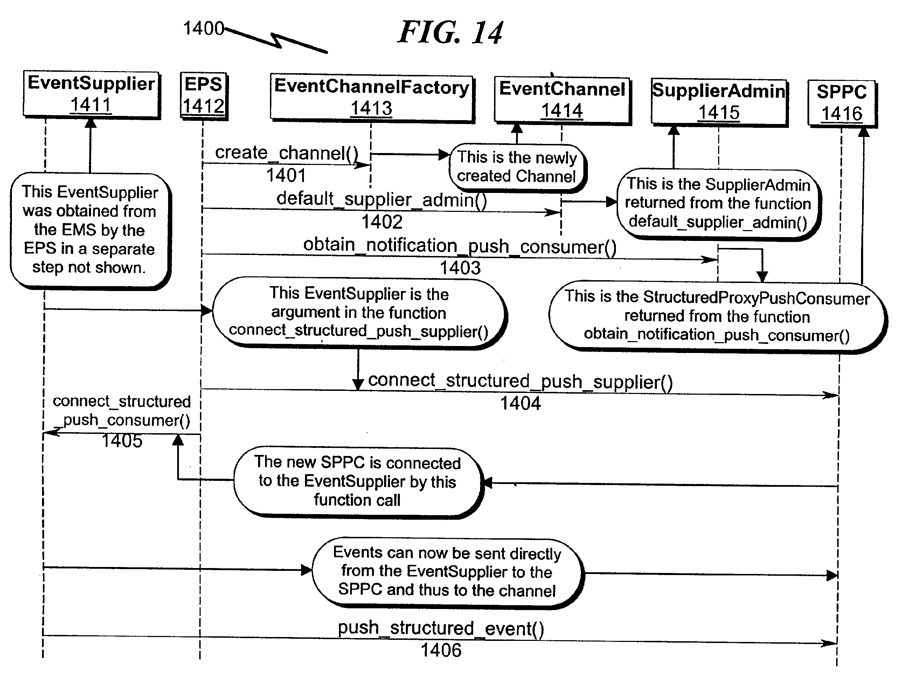

As illustrated in FIG. 14 (**1400**), an exemplary EPS Connection Sequence Diagram (**1400**) that describes the sequence, function calls, and objects needed to perform a typical Connection Activity is illustrated. The exemplary signaling system utilizes EventSupplier (**1411**), EPS (**1412**), EventChannelFactory (**1413**), EventChannel (**1414**), SupplierAdmin (**1415**), and SPPC (Structured Proxy Push Consumer) (**1416**) components, but one skilled in the art would be able to modify this structure in a variety of ways to achieve similar functions and/or results. The generalized Connection Sequence Signaling Method (**1400**) can be implemented using the following steps and/or function calls:
10. create_channel() (**1401**). This builds the newly created channel EventChannel (**1414**).

default_supplier_admin() (**1402**). This creates the SupplierAdmin component (**1415**).
obtain_notification_push_consumer() (**1403**). This creates the StructuredProxyPushConsumer.
connect_structured_push supplier() (**1404**). The EventSupplier (**1411**) is the argument to this function.
connect_structured_push_consumer() (**1405**). The new SPPC is connected to the EventSupplier (**1411**) by this function call.
push_structured_event() (**1406**). Events can now be sent directly from the EventSupplier (**1411**) to the SPPC and thus to the channel.
One skilled in the art would no doubt be able to modify the order of execution of the above steps to achieve similar if not identical functionality.

### ETA Connection Sequence Signal Flow (1500)

As illustrated in FIG. 15 (**1500**), an exemplary ETA Connection Sequence Diagram (**1500**) that describes the sequence, function calls, and object needed to perform a typical ETA Construction Activity is illustrated. The exemplary signaling system utilizes anEventSupplier (**1511**), EventAdministrator (**1512**), ElementManager (**1513**), EPS (**1514**), anSPPC (**1515**), and NaS (NamingService) (**1516**) components, but one skilled in the art would be able to modify this structure in a variety of ways to achieve similar functions and/or results. The generalized ETA Construction Signaling Method (**1500**) can be implemented using the following steps and/or function calls:
11. connect_channels (**1501**). Upon startup, the EMS (**1513**) obtains a reference to the EPS (**1514**) and calls this function. This triggers the formation of the ETA by the EPS (**1514**).

get_ne_group_EA() (**1502**). To connect the EMS (**1513**) to the ETA, the EPS must obtain EventSuppliers. These are created by an EventAdministrator (**1512**). The correct EventAdministrator (**1512**) is obtained by this function call.
register_for_event_types() (**1503**). This function tells the EventAdministrator (**1512**) which event types the EPS wants to send to the SPPC of a Channel. The event types are different for each channel. AnEventSupplier (**1511**) is returned as a result of this function call.
connect_structured_push_supplier() (**1504**). This step is described in more detail in FIG. 14 (**1404**).
connect_structured_push_consumer() (**1505**). This step is described in more detail in FIG. 14 (**1405**).
bind() (**1506**). The newly created and connected Channel is "published" in the NamingService (NaS) (**1516**), making it available to clients for connection.
One skilled in the art would no doubt be able to modify the order of execution of the above steps to achieve similar if not identical functionality.

Generally, the steps of creating a Channel and an SPPC for it, **register_for_event_types(),** the subsequent **connect_** function calls and the **bind()** operation are repeated three times. The first is done for Alarm type events, the second is done for non-Alarm events that are not EMS process related. The third is done for EMS process related events. The details of these events are specific to the ECOM EMS. One skilled in the art will no doubt realize other combinations and configurations are possible using the teachings presented in FIG. 15.

### Generic Signal Flow (1600)

Finally, it should be noted as illustrated in FIG. 16 (**1600**) that the present invention permits generic event suppliers (**1601**) to communicate with event consumers (**1602**) through arbitrary communication networks (**1603**) under control of the EPS (**1604**). The present invention anticipates that the encoded signaling (**1605**) associated with this communication process is novel in contrast to the prior art given the radical difference in event transport implementations as indicated by FIG. 4 (**0400**) (prior art) compared with FIG. 6 (**0600**) (present invention).

### PREFERRED SYSTEM CONTEXT OF THE PRESENT INVENTION

While the present invention may be best applied to situations in which telecommunications networks are to be managed and maintained either locally or remotely using graphical user interface (GUI) based operator consoles, the present invention also has wide applicability in situations in which any type of hardware and/or software component in a computer network is to be managed in a uniform way with minimal software design complexity and maintenance costs.

The functional elements of the present invention are widely applicable to situations involving multiple types of remote equipment sourced from a variety of hardware and software manufacturers. Since the present invention breaks the compile-time link between network element management and the tool used to perform the management function, this permits a wide variety of applications in situations where networks must be grown dynamically by adding hardware and software, but which must remain up and functional during this upgrade process.

### CONCLUSION

An **Event Publishing Service (EPS)** system and method incorporating a software component that permits encapsulation of the details necessary in constructing any arbitrary **Event Transport Architecture (ETA)** has been disclosed. By encapsulating the details of the ETA, the EPS removes the coupling between the ETA policy and any dependent components. This removes coupling problems between individual software components and enables a high degree of flexibility in the design and implementation for any distributed software that uses the ETA. By significantly reducing coupling, the EPS enables greater flexibility in the ETA with lower cost than other solutions. Although it is difficult to quantify, it is not unreasonable to expect that using the EPS will result in a reduction in life-cycle costs by a factor of two to ten over prior art solutions, depending upon the number of other components.

Although a preferred embodiment of the present invention has been illustrated in the accompanying Drawings and described in the foregoing Detailed Description, it will be understood that the invention is not limited to the embodiments disclosed, but is capable of numerous rearrangements, modifications, and substitutions without departing from the spirit of the invention as set forth and defined by the following claims.

## Claims

1. An event publishing service (EPS) system comprising:
(a) one or more event suppliers;
(b) one or more event consumers;
(c) one or more notification channel means; and
(d) an event publishing service means;
wherein
said event consumers obtains said notification channel means from said event publishing service means;
said event suppliers connects to said notification channel means by use of said event publishing service means;
said event suppliers transport events to said event consumers through said notification channel means, and;
said notification channel means are constructed and controlled by said event publishing service means.

2. The event publishing service (EPS) system of Claim 0
wherein said event suppliers and event consumers reside on separate nodes within a computer network.

3. The event publishing service (EPS) system of Claim 1
wherein one or more components of said system is implemented within an application programming interface (API).

4. The event publishing service (EPS) system of Claim 1
wherein said transport occurs over the Internet.

5. The event publishing service (EPS) system of Claim 1
wherein one or more components of said system is implemented on a personal computer (PC).

6. The event publishing service (EPS) system of Claim 5
wherein said personal computer utilizes a HP-UX™ operating environment.

7. The event publishing service (EPS) system of Claim 5
wherein said personal computer utilizes a LINUX™ operating environment.

8. The event publishing service (EPS) system of Claim 5
wherein said personal computer utilizes a SOLARIS™ operating environment.

9. The event publishing service (EPS) system of Claim 5
wherein said personal computer utilizes a UNIX™ operating environment.

10. The event publishing service (EPS) system of Claim 5
wherein said personal computer utilizes a Microsoft® Windows™ operating environment.

11. An event publishing service (EPS) method comprising:
(1) reading a configuration file;
(2) building initial channels;
(3) registering said channels in a naming service;
(4) waiting for connection requests;
(5) creating additional channels;
(6) connecting an EMS to said channels;
(7) registering new channels in said naming service and proceeding to step (4).
wherein
said channels are used to transport events from event suppliers to event consumers.

12. The event publishing service (EPS) method of Claim 11
wherein said event suppliers and event consumers reside on separate nodes within a computer network.

13. The event publishing service (EPS) method of Claim 11
wherein one or more steps of said method is implemented within an application programming interface (API).

14. The event publishing service (EPS) method of Claim 11
wherein said transport occurs over the Internet.

15. The event publishing service (EPS) method of Claim 11
wherein one or more steps of said method is implemented on a personal computer (PC).

16. The event publishing service (EPS) method of Claim 15
wherein said personal computer utilizes a HP-UX™ operating environment.

17. The event publishing service (EPS) method of Claim 15
wherein said personal computer utilizes a LINUX™ operating environment.

18. The event publishing service (EPS) method of Claim 15
wherein said personal computer utilizes a SOLARIS™ operating environment.

19. The event publishing service (EPS) method of Claim 15
wherein said personal computer utilizes a UNIX™ operating environment.

20. The event publishing service (EPS) method of Claim 15
wherein said personal computer utilizes a Microsoft® Windows™ operating environment.

21. The event publishing service (EPS) method of Claim 11
wherein said read configuration file step further comprises
(1) reading configuration file(s);
(2) determining the number of channels;
(3) determining the event types to be carried by said channels;
(4) determining the quality of service properties for said channels;
(5) determining said channel names;
(6) determining said channel connectivity; and
(7) determining if there are more channels, and if so proceeding to step (3).

22. The event publishing service (EPS) method of Claim 11
wherein said build initial channels step and/or said connect EMS to channels step further comprises
(8) obtaining an EventChannelFactory object;
(9) creating a channel;
(10) obtaining SupplierAdmin from said channel;
(11) creating a ProxyConsumer;
(12) determining if this is a build initial channel request, and if so, returning to the procedure caller;
(13) obtaining an EventSupplier from said EMS; and
(14) connecting said EventSupplier to said ProxyConsumer to permit said events to be sent through said channel.

23. An event publishing service (EPS) encoded propagated signal data stream constructed using
(15) one or more event suppliers;
(16) one or more event consumers;
(17) a communications network;
(18) encoded event signaling data; and
(19) an event publishing service means;
wherein
said event publishing service means coordinates event transport between said event suppliers and event consumers over said communications network;
said coordination occurs via encoding of event information from said event suppliers to said event consumers via said communication channel;
said event publishing service permits event consumers to obtain event channels for said communication and permits said event suppliers to connect to said event channels.

24. A computer usable medium having computer-readable program code means providing event publishing service (EPS) functionality, said computer-readable program means comprising:
(20) computer program code means for reading a configuration file;
(21) computer program code means for building initial channels;
(22) computer program code means for registering said channels in a naming service;
(23) computer program code means for waiting for connection requests;
(24) computer program code means for creating additional channels;
(25) computer program code means for connecting an EMS to said channels;
(26) computer program code means for registering new channels in said naming service; and
(27) computer program code means for proceeding to step (4).
wherein
said channels are used to transport events from event suppliers to event consumers.

25. The computer usable medium of Claim 24 wherein said event suppliers and event consumers reside on separate nodes within a computer network.

26. The computer usable medium of Claim 24 wherein one or more steps of said functionality is implemented within an application programming interface (API).

27. The computer usable medium of Claim 24 wherein said transport occurs over the Internet.

28. The computer usable medium of Claim 24 wherein said medium is compatible with a personal computer (PC).

29. The computer usable medium of Claim 28 wherein said personal computer utilizes a HP-UX™ operating environment.

30. The computer usable medium of Claim 28 wherein said personal computer utilizes a LINUX™ operating environment.

31. The computer usable medium of Claim 28 wherein said personal computer utilizes a SOLARIS™ operating environment.

32. The computer usable medium of Claim 28 wherein said personal computer utilizes a UNIX™ operating environment.

33. The computer usable medium of Claim 28 wherein said personal computer utilizes a Microsoft® Windows™ operating environment.
